# EUROPEAN PATENT APPLICATION

(11) **EP 2 568 414 A1**
(43) Date of publication of application: **13.03.2013**
(21) Application number: 11180807.7
(22) Date of filing: 09.09.2011
(51) Int. Cl.: G06K 9/00

(54) **Surveillance system and method for detecting behavior of groups of actors**

(71) Applicant: Nederlandse Organisatie voor toegepast- natuurwetenschappelijk onderzoek TNO, 2628 VK Delft (NL)
(72) Inventor: van der Mark, Wannes, 2628 VK Delft (NL); Halma, Arvid, 2628 VK Delft (NL); Bovenkamp, Ernst Gerard Pieter, 2628 VK Delft (NL); Eendebak, Pieter, 2628 VK Delft (NL)
(74) Representative: Jansen, Cornelis Marinus

(57) **Abstract**

Electronic surveillance comprises detecting positions and motion of a plurality of detected actors in an area under surveillance. A set of rules of behavior is provided that each define at least a predicted aspect of motion of a modeled actor. At least part of the rules of behavior is specified dependent on position and/or motion of the modeled actor relative to a further actor. For each of the rules of behavior whether said aspect of motion and the position and/motion of a first one of the detected actors relative to a second one of the detected actors, when used as the position and/motion of the modeled actor satisfy the rule of behavior. As a result of detection actors that have been detected to participate in a rule may be marked on a display screen that shows an image of the area under surveillance, measures such as opening of doors may be controlled in the area or an alert may be generated if a rule is found to be satisfied.

## Description

### Field of the invention

The invention relates to a surveillance system and a method of detecting behavior of actors or groups of actors from surveillance data.

### Background

Today's video surveillance systems mostly rely on human observers to watch display screens that show camera images of an area under surveillance. Simple tasks like detecting persons (more generally called "actors" herein) moving in specified areas can be performed automatically using an image processing system, based on the camera images. But detection of more complex behavior requires interpretation of the camera images by a human observer.

A form of automated interpretation of human behavior from camera images is described in an article by Gonzàlez et al, titled "Understanding dynamic scenes based on human sequence evaluation". Gonzàlez' system uses video images of an area under surveillance to detect the tracks followed by persons in the images and their postures. The detected information is converted into 3D data with the aid of information about the 3D properties of the fixed surfaces that are visible in the images.

Gonzàlez' system makes use of a predetermined set of state graph models for different classes of human actions. Each state graph models defines a number of states and possible transitions between states. The states define possible positions, velocities and postures that are consistent with the states. Examples of simple states are "on sidewalk", "on road", "on crosswalk", "has speed", "is sitting" etc. More complex states can be built from combinations of such states.

The detected tracks and postures make it possible to determine whether or not detected persons in individual video frames satisfy the conditions for being in specific states. Gonzàlez' system searches for state graph models for a person that are consistent with the states in individual video frames, i.e. wherein the temporal transitions between different states correspond to possible transitions of the model.

Gonzàlez' system makes it possible to translate the detections from individual video frames into classification of personal behavior of detected persons. However, in practice, Gonzàlez' system limits the distinctions that can be made between different personal behavior.

### Summary

Among others, it is an object to provide for the possibility of using detected locations and/or motion of actors in an area under surveillance to make more refined distinctions between different behavior of actors.

An electronic image based surveillance method is provided that comprises
- detecting positions and motion of a plurality of detected actors in an area under surveillance;
- providing a set of rules of behavior, each of said rules of behavior defining at least a predicted aspect of motion of a modeled actor, at least part of the rules of behavior being specified dependent on position and/or motion of the modeled actor relative to a further actor;
- determining, for each of the rules of behavior whether said aspect of motion and the position and/motion of a first one of the detected actors relative to a second one of the detected actors, when used as the position and/motion of the modeled actor satisfy the rule of behavior. As used herein, "actors" cover human persons, but also animals or robots, or any other entity that is capable of acting dependent on its perceived environment in the area under surveillance. When applied to robots, the method can be used to detect features of the programs of the robots or reverse engineer or classify the programs. The position and/or motion of actors may be detected for example from images of at least parts of the area under surveillance, such as camera images, radar images etc, and/or from signals transmitted by tags carried the actors.

Detection of the position and/or motion of a plurality of actors makes it possible account for interaction between actors when it is detected that the motion shows a match with a rule of behavior that involves several actors. Such a rule makes it possible to detect a combination of actors that may need attention, rather than just an individual actor. Thus for example, behavior can be detected wherein a detected actor follows another detected actor, or an alarm due to an unexpected movement of an actor can be suppressed if the movement can be explained by a rule according to which the actor avoids another actor. In each case both the detected actor and the other actor can be identified, for example in an image displayed to a human observer, to facilitate surveillance. Of course, in addition to the set of rules that involve more than one actor, other rules may be used that involve only a single actor and its location and/or motion.

An embodiment of the method comprises determining an indication of a field of view of the first one of the actors, for example from image data. In this embodiment determining whether the rule of behavior is satisfied comprises testing whether the position of the second one of the actors is in the field of view of the first one of the actors. In a further embodiment the indication of a field of view may be determined by determining an indication of a direction of view of the first one of the actors from an image.

The use of fields of view of the detected makes it possible to account even more accurately for the interaction between actors, when it is combined with rules of behavior that have conditions dependent on objects in the detected field of view of a rule controlled object. Thus for example, it can be excluded that rule applies to behavior if the rule controlled object cannot have seen a cause for the behavior.

In an embodiment at least one of the rules of behavior is specified dependent on perception of a sound, a touch or a smell by the modeled actor. Thus for example, the rule may define that it applies only if the modeled actor is able to hear a sound with properties (e.g. loudness or loudness within one or more spectral bands) in a specified range within a predetermined time interval before a predicted motion. If so, output from a sound sensor in the area under surveillance may used, and the rule may be found to apply only after testing that the sound sensor has detected a sound that has properties in the specified range within the specified time interval. Similarly touching, for example of a surface like a control button, or the hand of another actor may be used, or a condition on a smell may be tested by measuring a concentration of a predetermined chemical substance that leads to this smell.

In a further embodiment, position dependent measurements of sound, touch or concentration of chemicals may be measured, by using a plurality of sensors at mutually different positions in the area under surveillance. This makes it possible to test (at least approximately) whether the sound, touch or smell can be perceived at the position of an actor, so that the rule can be applied dependent on position.

Rules that account for directions and or speed on a (quasi-) continuous scale, such as a "Goto" rule that predicts that a detected actor will move along a shortest possible path to a predetermined destination or a "Follow" rule that predict that an object will move to follow another object, makes it possible to detect specific forms of behavior. In this case, the use of additional rules such as a rule that predicts motions to avoid collision with other users can be used to make the method more robust against deviations due to external influences.

The method may be used for example to generate an alert, activate a sign (e.g. a warning sign or a direction sign) in the area under surveillance and/or to control a gate of the area under surveillance, in response to detection that a predetermined condition in terms of satisfied rules is met. Thus a human guard can be alerted or an automated response can be activated in specifically selected conditions. In an embodiment an image may be displayed with a mark up to identify the first and second one of the actors and the other of the detected in a displayed image that have been detected to satisfy one or more of the rules of behavior, when their position and/or motion is used for the rule controlled object and the further object in the rule of behavior. Optionally, the markup may identify a person that has been found to satisfy a rule of behavior as well as other persons that are involved in that rule, such as another person that is being followed.

An electronic surveillance system is provided that comprises
- an input for receiving data representing sensor data from an area under surveillance;
- a processing system comprising an actor detection module configured to detect positions and motion of a plurality of detected actors in the area under surveillance from the data representing the sensor data;
- a memory storing information representing a set of rules of behavior, each of said rules of behavior defining at least a predicted aspect of motion of a modeled actor, at least part of the rules of behavior being specified dependent on position and/or motion of the modeled actor relative to a further actor;
- the processing system being configured to test for each of the rules of behavior whether said aspect of motion and the position and/motion of a first one of the detected actors relative to a second one of the detected actors, when used as the position and/motion of the modeled actor satisfies the rule of behavior.

### Brief description of the drawing

These and other objects and advantageous aspects will become apparent from a description of exemplary embodiments, using the following figures
- Figure 1: shows an electronic surveillance system
- Figure 2a-c: illustrate geometric relations between persons
- Figure 3: shows flow-chart of operation of a surveillance system
- Figure 4: illustrates determination of a field of view
- Figure 5: illustrates how a person's track can be classified
- Figure 6: illustrates a rule in terms of location, moving direction, speed and visibility
- Figure 7: illustrates use of observation of new parts of an environment

### Detailed description of exemplary embodiments

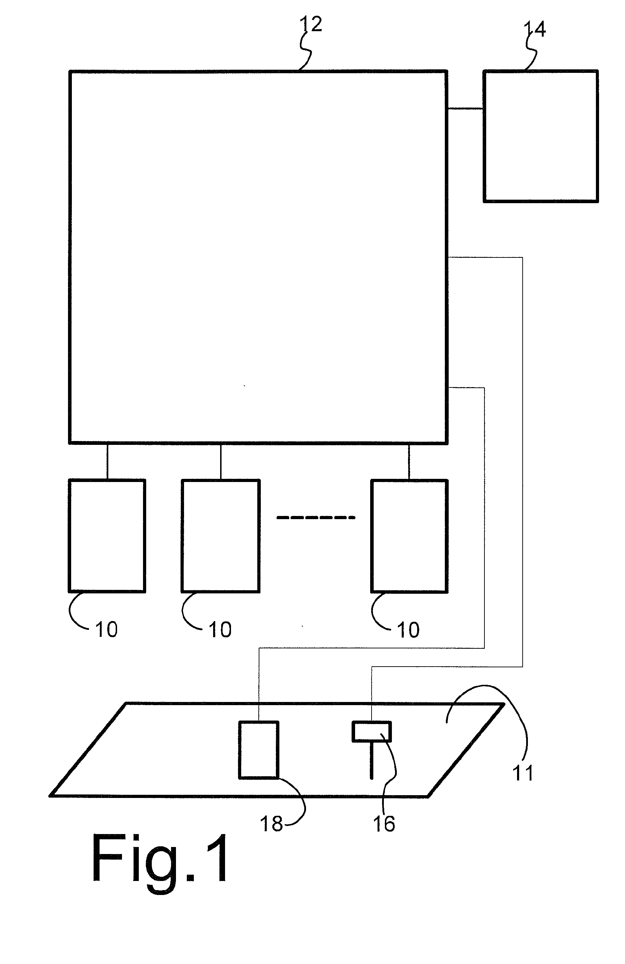

Figure 1 shows an electronic surveillance system, comprising a plurality of cameras 10, directed at an area under surveillance 11, a processing system 12 and a display screen 14. Processing system 12 is coupled to cameras 10 and display screen 14. By way of example a controllable information sign 16 and a controllable gate 18 in the area under surveillance 11 are also shown, processing system 12 having outputs coupled to control inputs of information sign 16 and gate 18. Cameras 10 may be located above area under surveillance 11 looking down on area under surveillance 11 and/or adjacent to area under surveillance 11 looking sideways at area under surveillance 11.

In operation, each camera 10 captures a temporal series of images of the area under surveillance 11 and supplies data representing the images to processing system 12. Processing system 12 detects image areas in the images that show persons (or more generally actors like humans, animals or even robots that are able to act dependent on their perceived environment), or moving objects in general and determines tracks of motions of these persons or objects. Processing system 12 may translate the position of the image areas into world coordinates, e.g. 3D coordinates or 2D coordinates on the ground in the area under surveillance, for use in the tracks, for example from predetermined coordinates of a surface (e.g. the ground) at the lowest points of the detected areas.

Processing system 12 tests the resulting information by means of a predetermined set of rules of behavior. Each rule of behavior defines a direction of motion of a modeled person as a function of the location of the modeled person and features of an environment of that location. The predetermined set of rules of behavior may include a "Goto" rule, a "Follow" rule, an "Avoid" rule, a "Meet rule".

The "Goto" rule for a modeled person has a destination location as parameter and it defines a direction of motion of the modeled person as the direction from the current location of the modeled person along a path from the current location to the destination location. The path may be defined using a path planning algorithm, designed to determine a shortest path between locations without collisions with obstacles. Static and or dynamic obstacles may be used. For example each detected person other than the modeled person may be included as an obstacle. Furthermore, detected moving objects, which may be cars etc., may be included as obstacles. Optionally, the obstacles may be included in a time dependent way using prediction of their future motion.

For a given area under surveillance, a plurality of "Goto" rules may be provided, each for a respective different destination location. A predetermined set of destination locations may be used to define different "Goto" rules, including for example the locations of exits (e.g. gates), a location of a reception desk, a location of an office, a predetermined waiting area, a predetermined meeting point etc.

The "Follow" rule requires the indication of a further person detected in the images. This rule defines the direction of motion of a modeled person as a direction of a path from the current location of the modeled person to the current location of the indicated further person. This path may be determined in the same way as for the "Goto" rule, or by a simpler algorithm that merely uses a straight line between the locations as the path. In a further embodiment, the "Follow" rule may depend on whether the indicated further person is in the field of view of the modeled person.

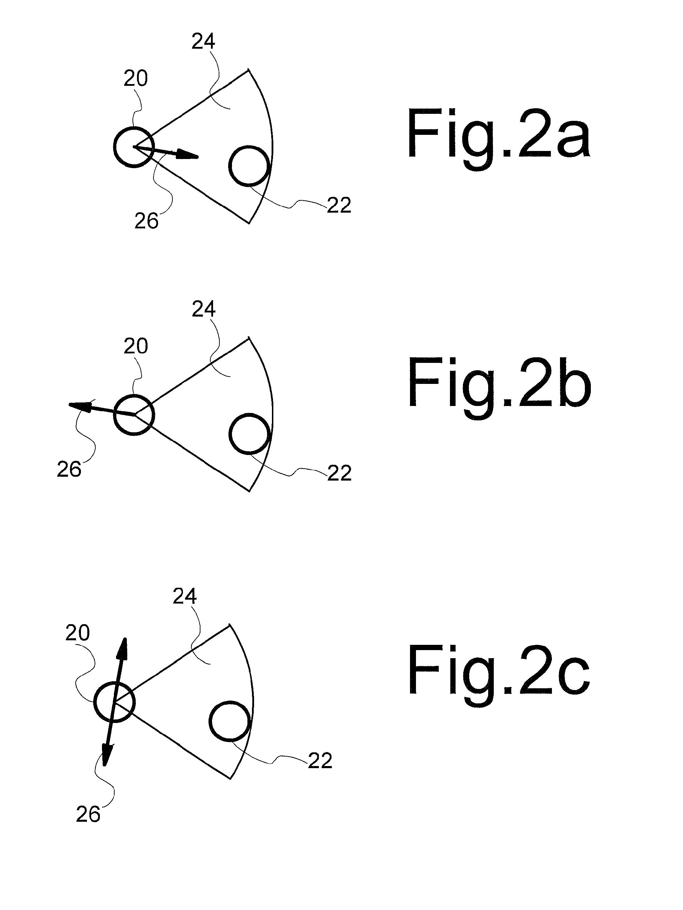

Figure 2a illustrates geometric relations between the modeled person 20, the indicated further person 22, the field of view 24 and the direction of movement 26 defined by the "Follow" rule. In another embodiment the "Follow" rule may define the direction of motion of the modeled person 20 as the direction of movement of the indicated further person 22 (parallel motion) which applies if the distance between the locations of the modeled person 20 and the indicated further person 22 is less than a predetermined threshold and optionally under condition that the indicated further person is in the field of view 24 of the modeled person 20. Optionally the rule may define switching to this direction from a path based direction, or mixing these directions, dependent on a distance between the modeled person and the indicated further person.

The "Avoid" rule requires the indication of a further person detected in the images. Figure 2b illustrates geometric relations involved in an example of the "Avoid" rule. This example of the "Avoid" rule defines the direction of movement 26 of a modeled person 20 as a direction of opposite to the direction from the modeled person toward the indicated further person 22, as defined for the "Follow" rule. In a further embodiment, the "Avoid" rule may depend on whether the indicated further person 22 is in the field of view 24 of the modeled person 20. In another embodiment the "Avoid" rule may depend on distance from the modeled person 20 to the indicated further person 22.

Another "Avoid" rule (the "Avoid_2" rule) may represent a behavior to deviate from behavior defined by other rules in order to avoid collision with other persons. The "Avoid_2" rule requires the indication of a further person detected in the images. Figure 2c illustrates geometric relations involved in an example of the "Avoid_2" rule. This example of the "Avoid_2" rule defines the direction of movement 26 of a modeled person 20 in a negative way as any direction not toward the indicated further person 22, as defined for the "Follow" rule. In another embodiment, the "Avoid_2" rule defines the direction of movement 26 of a modeled person 20 as a standstill or motion in a direction perpendicular to the direction towards the indicated further person 22, as defined for the "Follow" rule. In a further embodiment, the "Avoid_2" rule may depend on whether the indicated further person 22 is in the field of view 24 of the modeled person 20. In another embodiment the "Avoid_2" rule may depend on distance from the modeled person 20 to the indicated further person 22. For example, the rule may define that it does not apply of the distance is above a predetermined threshold value.

The "Meet rule" may require the indication of a group of at least one a further person detected in the images. This rule defines absence of motion when the modeled person is within a predetermined distance from the persons in the group. In a further embodiment, the "Meet" rule may depend on whether the modeled person and the indicated further person(s) are in each others field of view.

Although embodiments have been described wherein each rule defines a direction of motion, or an absence of motion, in a further embodiment rules may be used that define a speed of motion, and/or a range of possible directions and speeds of motion, or a scale factor size for the accuracy of the direction and/or speed. Thus for example, a "Goto" rule may define a range of directions from a current location along paths with travel times to the destination that deviate less than a predetermined absolute or relative amount from the travel time along the shortest path. Similarly, a "Follow" rule may define a range of directions. The rule may define that size of such a range may depend on other parameters, such as the distance to a destination or indicated further person.

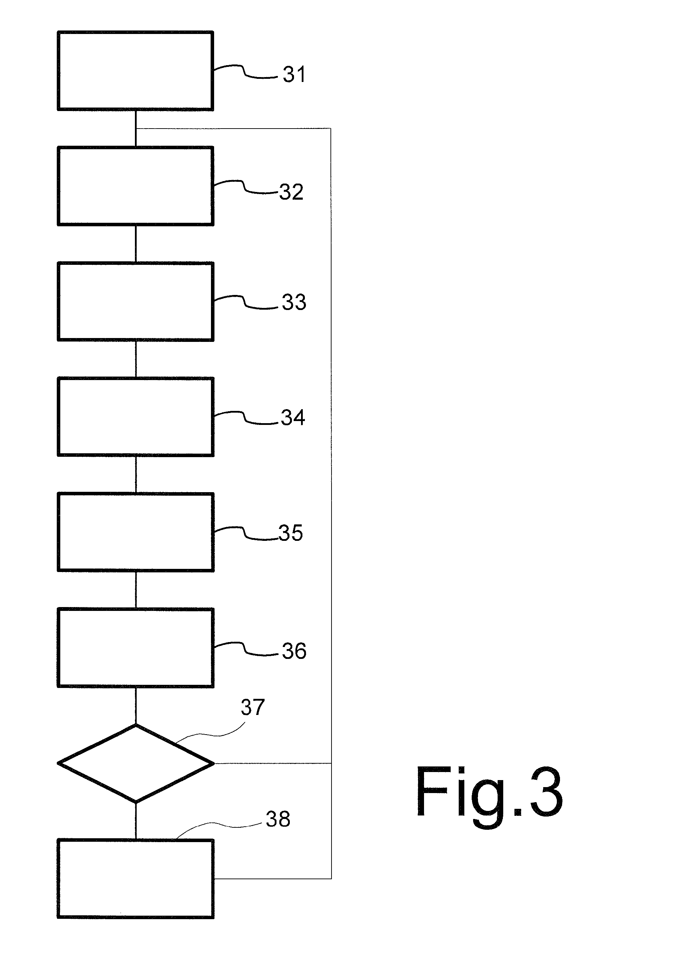

Figure 3 shows a flow chart of operation of processing system 12. In a first step 31, processing system 12 initializes information about the area under surveillance. It sets a set of detected persons to an empty set. In a second step 32, processing system 12 receives images for a current time point from different cameras 10, or an image from one camera 10.

In a third step 33, processing system 12 detects image areas in the image(s) that show persons. As will be explained, third step 33 is part of loop wherein the set of detected persons may be expanded or reduced dependent on the images. Each person may be represented by a respective index in an array of data fields, or a label. When it has included a person in this set, processing system 12 will use the data field for the person to store data representing a track of locations for the person as a function of time and optionally data representing the person's field of view as a function of time.

In a third step 33, processing system 12 may use the stored data of persons in the set of detected persons to detect and/or identify image areas that show persons in the set. Motion detection may be used, e.g. by means of a measure of difference between image content in a first patch in an image for a current time point and a second patch in an image for a previous time point, for different displacement vectors between the first and second patch, and a selection of one of the displacement vectors with the least measure of difference. Alternatively, recognition techniques such as histogram comparison, edge matching etc may be used to identify image areas that show persons in the set of detected persons, or processing system 12 may simply us the image positions where image content changes in or adjacent to image areas for the persons in the image for a previous time point.

Moreover, a third step 33, processing system 12 may detect image areas that show persons that are not yet in the set of detected persons. In an embodiment, the image areas may be detected on the basis of motion detection, image content change in the image areas etc, optionally limited to image areas within a predetermined distance from the borders of the image(s).

In a fourth step 34, processing system 12 updates the data representing tracks of locations for respective ones of the persons for which image areas have that have been detected in third step 33. Furthermore, processing system 12 may add persons to the set, if persons have been detected that cannot be identified with existing persons in the set. The update may comprise integration of data obtained from image areas in different images for the same time point that are associated with the same person and a translation of image coordinates to world coordinates (e.g. computation of a single set of world coordinates from the image areas in different images).

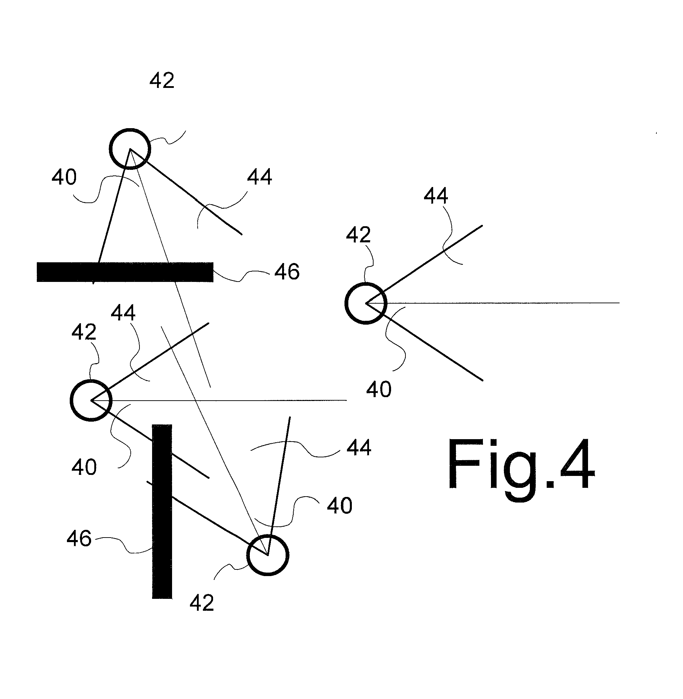

In a fifth step 35 processing system 12 determines or updates an indication of the fields of view of the detected persons. In an embodiment illustrated by means of figure 4, this comprises a determination of an estimate of viewing direction 40 of each of the detected persons 42 from the images. In this embodiment, a field of view 44 of a person is defined by means of a range of directions including the estimated viewing direction 40 (e.g. directions at less than a predetermined angle relative to the viewing direction 40). The field of view 44 may be a set of locations located along these viewing directions. Optionally, this set may also be limited to locations at no more than a predetermined distance (R) to the location of the detected person 42. Also optionally, locations along a direction in the range of directions may be excluded from the determined or updated field of view if they are found to lie at a greater distance from the location of the detected person than the location of an obstacle 46. Predetermined information about the location of obstacles 46 such as walls in the area under surveillance may be used for this purpose. Furthermore, the location of detected persons 42 and/or other objects may be used to define the locations of obstacles. The field of view may be determined in two or three dimensions. A two dimensional field of view may be defined by selecting only directions relative to the direction of view in a predetermined plane, for example a plane parallel to the ground surface of the area under surveillance. In a three dimensional field of view directions outside this plane may also be used. Use of a two dimensional field of requires less information to be determined from the images.

Image processing methods for determining of an estimate of viewing direction of a detected person from images are known per se.

In one embodiment a camera system could be used to determine the field of view of an entity such as a human or animal. In this case facial recognition software is used to determine the location and orientation of the face in the camera image. Such a recognition image processing algorithm will detect salient facial features such as the eyes, mouth or chin. From this information the direction can be derived in which the entity is looking. The field of view can be determined based on this viewing direction. In case no observation direction is available; it is assumed that the entity is looking in the direction that it was last moving.

For example, processing system 12 may detect image areas in the images that show faces and/or other sides of a head at the top of or above the image areas where persons have been detected. In another example processing system 12 may determine the image locations where the eyes of detected person are visible. From the face areas and adjacent other head area(s) a nominal direction of view may be estimated, be it with the knowledge that the estimate may have an error due to inaccuracy. When the head of the same person is visible in a plurality of images, a more accurate direction of view may be determined. Similarly, the detected eye positions may be used to determine the nominal direction of view, optionally using detected eye positions of the same person from a plurality of camera angles.

Alternatively or in addition the direction of motion along detected track of the person may be used to determine the direction of view of the person. The direction of motion may be used as the direction of view for example, or the direction of view may be determined from a combination of the direction of motion and the direction of view that is estimated from the images only.

In an embodiment the direction of view for a current time point is determined by updating the direction of view determined for an earlier time point, for example by changing the latter over an angle along an arc from the direction of view determined for the earlier time point to that determined from the images for the current time point, the angle being taken as a predetermined fraction of the full angle along the arc. Alternatively, only the direction of view determined for the earlier time point to that determined from the images for the current time point. Use of updates has the advantage that the method is more robust against isolated errors.

It is not necessary that processing system 12 explicitly determines the set of locations in the field of view in fifth step 35. It may suffice that in fifth step 35 processing system 12 records detected information that allows a determination whether a location is in the field of view when needed. The detected direction of view may be recorded for example.

In a sixth step 36, processing system 12 computes match scores for each of the rules of behavior in its predetermined set of rules of behavior applied to each of the persons in the set of detected persons. That is, each detected person in the set of detected person is substituted as the modeled person in each of the rules of behavior. Moreover, this may be done, using different ones of the other detected persons as the indicated further person in the rules in different instances, for example each of the detected persons within a predetermined detected distance from the person used as modeled person. Each rule is then used to determine a direction of motion D(i) of the person (i) according to the rule, optionally after first determining whether the rule applies to the person. A rule may define that it does not apply for example when a distance from the modeled person to the indicated further person, or to a destination location, is above a predetermined threshold.

When a rule is used that depends on the field of view of the modeled person, processing system 12 may use the field of view from fifth step 35 in the rules. In an embodiment the field of view may be used to determine whether a rule applies for a user. For example, the "Follow", "Meet" and "Avoid" rules may define that they apply only if the detected location of the indicated further person is in the field of view of the modeled person (for example located in a direction from the detected location from the modeled person that is in the field of view of the modeled person). In an embodiment wherein the planned path of a person in a "Goto" rule depends on obstacles, moving obstacles may be used in the path planning algorithm plan as obstacles to be avoided, dependent on whether they are located in the detected field of view of the person.

If a rule applies, computation of the match score for this rule may comprise using the direction D(i) defined by the rule to compute a function f(D(i), D0(i)) that varies with the difference with the direction D0(i) found in the track of the person, as determined from the images. The computation of the function may comprise taking a scalar product of the directions D(i)*D0(i) for example. A different function may be used when the direction vector is zero. Alternatively a difference D(i)-DO(i) between the directions may be used. In embodiment, the function may depend on the scale factor size for the accuracy. In an embodiment a value D(i)*D0(i)/ { | v(i)-v0(i) | +1 } is used, wherein v(i) and v0(i) are velocities along the directions D(i) and D0(i) defined by the rule and the observed track. The result of the function may be used as an instant match score.

If it is determined that the rule does not apply to a person, this may be recorded or a predetermined instant match score value may be given that is lower than the maximum possible match score. A match score may be used that may have any value in a quasi continuous range of values. Instead a binary score may be used for example if a rule defines a range of directions within which detected directions D0(i) may be considered to match. Thus binary score may be set to indicate "no-match" for a detected person when it has been determined that the rule does not apply to that person.

In a further embodiment, time integrated match scores for the rules of behavior may be computed using the detected tracks of the persons up to a current time point rather than the direction at the current time point. Such a time integrated match score may be computed for example by summing instant match scores computed from the directions for different time points, optionally weighted with decreasing weight with increasing distance to the current time point. In the case of "Goto" rules a measure of difference between a planned path to a destination and the observed track may be used to determine the time integrated match score.

In the evaluation of the instant and/or time integrated match score may comprise use of the direction of motion D(i) of the person (i) according to the rules dependent on the outcome of application of the rules to other detected persons. Thus for example, if the match score for a rule exceeds a threshold, the direction of motion or future path of the modeled person according to that rule may be used to define the location of an obstacle formed by that person in the future, for use in a "Goto" rule or as a future location of an indicated further person involved in rules applied to other persons. For example, if the match score for a "Goto" rule for a person exceeds a threshold, the path of that person to the destination used in that rule may be used to define the future location of that person for use in the rules applied to other persons.

In a seventh step 37, processing system 12 detects whether the match scores and/or time integrated match scores meet a predefined condition for generating an alert. If so, processing system 12 executes an eight step 38, wherein it generates an alert, for example by causing one of the images for the current time point to be displayed on display screen with an indication of the image area(s) that show(s) the persons that contributed to meeting meet the predefined condition. After eight step 38, or after seventh step 37 if the predefined condition is not met, processing system 12 repeats the process from second step 32.

In another embodiment, processing system 12 may effect automatic precautionary actions in eight step 38. Processing system 12 may activate a sign in the area under surveillance for example (e.g. switch on a light or cause a selected image to be displayed), or it may cause exits or entrances to the areas under surveillance or between different parts of the area under surveillance (herein all termed "gates of the area under surveillance", which includes doors or fences etc) to be closed or opened, according to a predetermined relation between the match score and the precautionary action.

The nature of the predefined condition depends on user requirements. In one embodiment a condition is that one of the rules is satisfied for more than a predetermined number of detected persons. As used herein, a rule is said to be satisfied for a detected person if all conditions for a applying the rule, such as the presence of the indicated further person in the field of view are satisfied and/or its match score exceeds a predetermined value. For example, if an alert is desired when too many persons are heading to the same destination, the predefined condition may be that the "Goto" rule for that destination must be satisfied for more than a predetermined number of detected persons. In an embodiment, a "Goto" rule for a destination is satisfied for a detected person only if its match score is larger than for the "Goto" rule for other destinations for the same detected person. That is, in this embodiment seventh step 37 comprises testing whether this is so for a "Goto" rule when applied to a detected person,

As another example, if an alert is desired when some persons are following another, the predefined condition may be that the match score for the "Follow" rule for the same indicated further person is satisfied for at least a predetermined number of the detected persons.

In an embodiment the predefined condition may be that no predetermined rule from a predetermined set of rules is satisfied for a detected person, i.e. that the person has ceased to behave as allowed or expected. In this embodiment, predefined condition may be set so that eight step 38 is executed only when the none of these rules is satisfied during at any time in a time interval of predetermined length. In an embodiment, the predefined condition may be deactivated if an "Avoid_2" rule is found to be satisfied. Thus false alerts may be avoided if unexpected deviations from allowed behavior can be accounted for by avoidance. In other words, in this embodiment the predefined condition a predetermined rule is not satisfied for a detected person and that no "Avoid_2" rule is found to be satisfied for the detected person in relation to any indicated further person. Such a condition may be used for example to detect whether a detected person continues to be going to a specified destination, or in another example that the detected person does so unless it meets with others.

Although an embodiment has been described wherein a single set of rules of behavior is used for all persons, it should be appreciated that instead rules may be provided for objects that may be persons or vehicles for example. In an embodiment different sets of rules or alert conditions may be used for different types of objects, for example for persons and vehicles, the set of rules that is applied to a detected person depending on a detected type of object. In another embodiment different sets of rules may be used for different types of persons, for example for law enforcement officers and others, or between fans of different sports teams, depending on a detected type of person. A color detected color of clothing in the image areas that show persons may be used to select between different types of person.

Similarly, rules may provide that they are applicable only if the location of the modeled person is in a specified area, or that different sub-rules apply for locations in different areas. In this case the location of the modeled person may be used to select the applicable sub-rule by comparing it with definitions of the different areas.

Although examples have been given in terms of images behavioral rules that depend on viewing, it should be understood that rules may be based on use of other physically limited senses that are applicable for individuals. For individuals such as humans and animals this may be hearing, smell, tactile (touch) or temperature perception. In one embodiment, knowledge about the reaction of humans on an alarm can be used to set up rules about human starting an evacuation in case of hearing an audio alarm. Another embodiment would be burglars feeling a scene after setting off an burglar alarm. Other senses such as smell could be used to set up rules why people avoiding foul smelling garbage bins on the streets.

Although an embodiment has been shown wherein a plurality of cameras 10 is used, it should be appreciated that it may suffice to use a single camera. However, use of a plurality of cameras directed at a same location from different angles makes it possible to obtain a more reliable direction of view. Furthermore a plurality of cameras 10 may be used to extend the area under surveillance.

Although only cameras 10 have been described as sensor input in the illustrated embodiments, it should be appreciated that other types of sensor could be used as well. For example one or more sound sensors could be used, and the rules could be expanded to make the predicted direction of motion dependent on sound perceived by the modeled person. In this case processing system 12 may compute use the input from microphones at a set of locations in the area under surveillance to determine a synthetic sound signal at the location of a detected person (and optionally the direction dependence of this sound signal) and to one or more sound features of this synthetic sound signal, such as loudness, or loudness in a predetermined frequency band. In this case, at least one of the rules may be defined to apply only if the computed sound feature(s) meet(s) a predetermined condition. For example, the "Follow" rule may depend on whether a sound feature meets a condition representing that the modeled person could have heard a signal. As another example the "Meet" rule might depend on whether a sound feature meets a condition representing that the modeled person could have heard speech at the meeting.

In an embodiment additional sensors such as microphones or chemical detectors may be provided that detect phenomena that may result in sensory stimuli for persons. In this case, the determination whether rules apply could be performed at least partly dependent on the output of such additional sensors. Another instance of the "Meet" rule may depend on detection of the occurrence of a tactile (touch) event such as the shaking of hands.

The cameras (electro-optical sensors) may be sensitive to different wavelengths in the electro-optical spectrum; infra-red, visual, ultraviolet or multi-spectral. Instead of cameras active sensors could used such as sonar, radar or lidar, which ar based on the transmission, reflection and reception of sound, radio waves and light respectively. Other types of imaging sensors such as millimeter wave scanner or backscatter X-ray could also be applied. Furthermore, the persons themselves can be equipped with devices that can aid their observation by sensors. This can be done with active radio beacons, using the global position system (GPS) or Radio-frequency identification (RFID) devices. One example would be to install such a device in a visitor's badge or in the license plate of an vehicle.

Processing system 12 may be implemented as a single computer provided with a program designed to make it execute the process as described. Alternatively, processing system 12 may comprise a plurality of processors, including for example image signal processors for respective ones of cameras 10 and/or parallel processors that perform the described process in a distributed way. For example, different computers, each programmed to perform parts of the process may be used to compute match scores for different persons or different rules. Instead of a programmable computer or computers an electronic circuit may be used that is hardwired to perform part or all of the process. As used herein, a processing system, module etc will be said to be configured to perform an operation if it is programmable and has a program that will make it perform the operation and/or if it is an electronic circuit that is hardwired to do so. The processing system may have one or more image processing modules for detecting image areas that show persons, determining the location and motion of these persons and to determine the directions of view of the detected persons. The processing system may have one or more processing modules for testing whether the rules are satisfied. The rules may be stored implicitly as part of the program of the processing system that performs determinations whether the rules are satisfied or as input data representing the rules for use by a program that determines whether the rules are satisfied.

As will be appreciated, the detection of a plurality of persons in the image(s) makes it possible to account for interaction between persons when it is detected whether the image(s) show a match with a rule of behavior. Thus for example, behavior can be detected wherein a detected person follows another detected person, movements can be discounted in an evaluation of the images if an "Avoid" rule applies or deviations from a path to a destination can be discounted if other persons affect the path as obstacles.

As will be appreciated, the determination of fields of view of the detected persons makes it possible to account even more accurately for the interaction between persons, when it is combined with rules of behavior that have conditions dependent on persons in the detected field of view of a modeled person. Thus for example, it can be excluded that rule applies to behavior if the modeled person cannot have seen a cause for the behavior.

As will be appreciated, the use of rules that account for directions and or speed on a (quasi-) continuous scale, such as a "Goto" or "Follow" rule, makes it possible to detect specific forms of behavior. In this case, the use of additional rules such as an "Avoid" rule can be used to make such methods more robust against deviations due to external influences.

### Examples

In the following examples we present simple scenarios where sight is the only perception of a person that is being modelled here. The viewing angle of an person is set to that of a normal human being; in the range from 160°∼175°. Using facial recognition the viewing direction of humans can be extracted from the camera images. The system is able to model behavior based processes sensory input and different underlying rules.

### Modelled behaviors for classification

Behaviors, such as collision avoidance, individual/related behavior and joining/avoid behavior discussed below, are predicted in our system using rules. Each specific behavior is a rule and it only predicts the actions of a single entity. However, it takes as input the observations of the entities. For example, the positions of the other persons that are within the field of view. Based on the observations, the rule will predict an action of the person. This can be change in the person's movement direction, speed and/or location. However it can also be lack of action such as waiting or pausing. Group behavior is modelled to be a product of all the interactions between the persons that apply their rules individually. Using this approach, there is no need for pattern recognition or clustering approaches that try and find "common" or "similar" behaviors. Because of the application of rule based modeling our system can also predict person behavior instead of only classifying observed behavior.

### Collision avoidance behavior

In this example, considering the person's intention to avoid bumping into objects or other persons is modeled as a collision avoidance model. That model has as input the current location of the person, a potential goal, and other persons in its field of view.

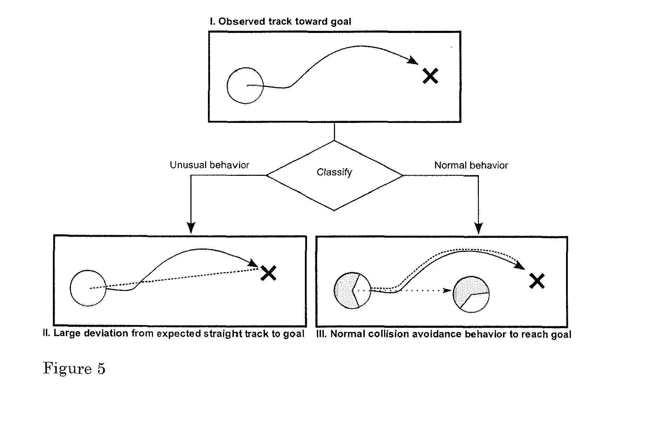

Figure 5 demonstrates how we can classify a person's track as being "normal" or "unusual" given its track more accurately when its perceptions are considered. In (I) the observed track of the person is shown; it moves to its goal on the right with a curve. At the beginning of the track our system can predict the most likely path for the person using a path planning algorithm. This can be a straight line, as is displayed in (II). The amount deviation between the predicted path and the actual path is used to determine how "unusual" a path is. In this example, the curved track is classified as "unusual" since it deviates a lot from the predicted straight line. However, when other objects and persons are considered that can be perceived by the person, the curved track can be explained as collision avoidance behavior: the person moves to its goal as quick as possible, but evades obstacles (III).

Such a basic behavior reduces the number of wrongly classified behavior as being "unusual" by explicitly modeling all persons' observations. This reduces the number of false alarms of such unusual behavior when the proposed system is used in security applications, for instance.

### Individual versus related behavior

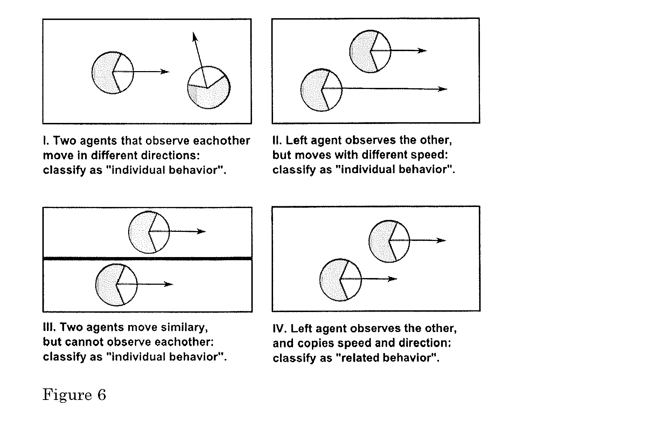

Figure 6 illustrates a second example wherein we look at another behavior models based on a person's observations. When a person is moving similarly (in same direction, with similar speed) as a nearby agent, both persons are likely to act as a small group (i.e. they are related). In a real world case this could be friends heading for the same goal, or a host and his guest.

Figure 6 explains the rule in terms of simple observable relations: location, moving direction, speed and visibility.

### Join versus avoid others behavior

At the moment a person observes new parts of its environment it can use this information to change its behavior in accordance to its intentions.

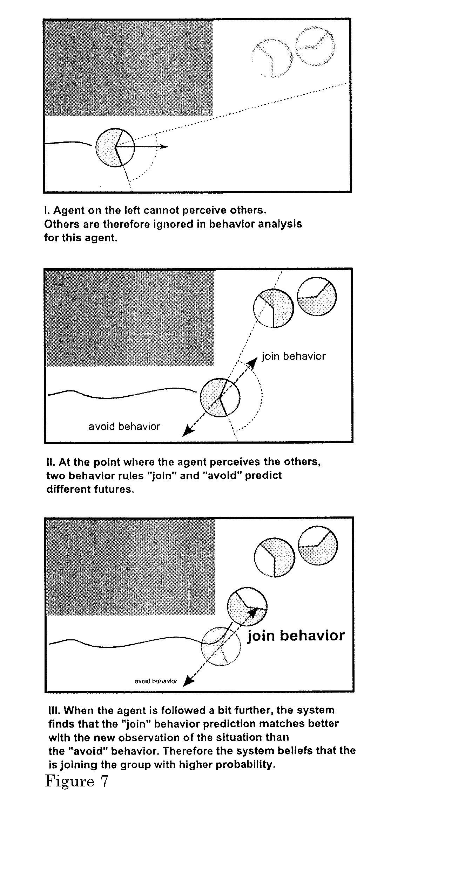

### Figure 7 illustrates an example.

This rule allows one to determine whether a person belongs to a particular group or not, based on the active behaviors. For example, for the join behavior the person does not see the other persons due to the visual occlusion (e.g. wall). In this state, it is assumed that the person is an individual and does not belong to the group. When the person is close enough it will be able to see the other persons. At this point in time, multiple behaviors might be applicable. For example the person will avoid the group and move away from them; therefore reaffirming the hypothesis that this person is not a member of the group. Otherwise, if the person will join te group it will start to move towards it. This is evidence for the hypothesis that the person is actually or will become a member of the group.

### Example summary

The examples show that more accurate models, considering an entity's perception will lead to better classification (collision avoidance example) and allows to determine its relation to other entities and its intentions (other two examples).

## Claims

1. An electronic surveillance method, comprising
- detecting positions and motion of a plurality of detected actors in an area under surveillance;
- providing a set of rules of behavior, each of said rules of behavior defining at least a predicted aspect of motion of a modeled actor, at least part of the rules of behavior being specified dependent on position and/or motion of the modeled actor relative to a further actor;
- determining, for each of the rules of behavior whether said aspect of motion and the position and/motion of a first one of the detected actors relative to a second one of the detected actors, when used as the position and/motion of the modeled actor satisfy the rule of behavior.

2. An electronic surveillance method according to claim 1, wherein at least one of the rules of behavior is specified dependent on whether the further actor is in a field of view of the modeled actor, the method comprising determining an indication of a field of view of the first one of the detected actors; said determining comprising testing whether the position of the second one of the detected actors is in the field of view of the first one of the detected actors.

3. An electronic surveillance method according to claim 1, wherein at least one of the rules of behavior is specified dependent on perception of a sound, a touch or a smell by the modeled actor, the method comprising detecting sounds, touching events and/or chemicals present in the area under surveillance, and determining whether the at least one of the rules of behavior is satisfied, comprising testing whether a sound, touching event and/or chemical matching the sound, touch or smell specified in the at least one of the rules of behavior has been detected.

4. An electronic surveillance method according to claim 3, comprising detecting the sounds, touching events and/or chemicals present at a plurality of detection positions in the area under surveillance, said determining whether the at least one of the rules of behavior is satisfied comprising testing whether a sound, touching event and/or chemical matching the sound, touch or smell specified in the at least one of the rules of behavior has been detected at least one of the detection positions that lies within a predetermined distance from the position of the first one of the detected actors.

5. An electronic surveillance method according to any one of the preceding claims, wherein the rules of behavior comprise a rule of behavior that defines a direction of motion of modeled actor dependent on a relative position of the modeled actor relative to the further actor.

6. An electronic surveillance method according to any one of the preceding claims, wherein the rules of behavior comprise a rule of behavior that defines a route that is predicted to be followed by the modeled actor in terms of a shortest path from the position of the modeled actor to a predetermined destination.

7. An electronic surveillance method according to claim 6, wherein the rule of behavior that defines said route is applied to the first one of the detected actors dependent on the position of at least one further one of the detected actors, disabling detection that said rule of behavior is found not to be satisfied due to motion to avoid said second one of the detected actors.

8. An electronic surveillance method according to any one of the preceding claims, comprising testing whether a predetermined condition that depends on whether one or a combination of rules is or is not satisfied for the at least one of the detected actors, and generating an alert, activating a sign in the area under surveillance and/or controlling a gate of the area under surveillance to be opened or closed, in response to detection that the predetermined condition is met.

9. An electronic surveillance method according to any one of the preceding claims, comprising
- testing whether a predetermined condition that depends on whether one or a combination of rules is satisfied for the first one of the detected actors,
- capturing images of the area under surveillance;
- selecting one or more of the images dependent on whether the image or images contain image areas showing the first one of the detected actors and the second one of the detected actors;
- displaying the image or images marked up to identify the first and second one of the detected actors in the displayed image or images.

10. An electronic surveillance system, comprising
- an input for receiving data representing sensor data from an area under surveillance;
- a processing system comprising an actor detection module configured to detect positions and motion of a plurality of detected actors in the area under surveillance from the data representing the sensor data;
- a memory storing information representing a set of rules of behavior, each of said rules of behavior defining at least a predicted aspect of motion of a modeled actor, at least part of the rules of behavior being specified dependent on position and/or motion of the modeled actor relative to a further actor;
- the processing system being configured to test for each of the rules of behavior whether said aspect of motion and the position and/motion of a first one of the detected actors relative to a second one of the detected actors, when used as the position and/motion of the modeled actor satisfies the rule of behavior.

11. An electronic surveillance system according to claim 10, wherein the processing system is configured to determine an indication of a field of view of the first one of the detected actors; said determining whether the rule of behavior is satisfied comprising testing whether the position of the second one of the detected actors is in the field of view of the first one of the detected actors.

12. An electronic surveillance system according to claim 10, comprising a sound, touch or chemical sensor, at least one of the rules of behavior being specified dependent on perception of a sound, a touch or a smell by the modeled actor, the processing system being configured to determine whether the at least one of the rules of behavior is satisfied, comprising testing whether a sound, touching event and/or chemical matching the sound, touch or smell specified in the at least one of the rules of behavior has been detected.

13. An electronic surveillance system according to any one of claims 10 to 12, wherein the processing system is configured to test whether a predetermined condition that depends on whether one or a combination of rules is or is not satisfied for the first one of the detected actors, the electronic surveillance system comprising a display screen, an activatable signal generator and/or a controllable gate, the processing system being configured to cause an alert to be displayed on said display screen, to activate the signal generator and/or to control the gate in response to detection that the predetermined condition is met.

14. A computer program product, comprising a program of instructions for a programmable processing system that, when executed by the programmable processing system will cause the programmable processing system to execute the method of any of claims 1 to 9.
